# EUROPÄISCHE PATENTSCHRIFT

(11) **EP 2 220 147 B1**
(45) Veröffentlichungstag und Bekanntmachung des Hinweises auf die Patenterteilung: **28.03.2012**
(21) Anmeldenummer: 08857659.0
(22) Anmeldetag: 25.11.2008
(51) Int. Cl.: C08J 5/00, D01F 11/00, C08K 9/04

(54) **VERFAHREN ZUR HERSTELLUNG EINES LEITFÄHIGEN POLYCARBONATVERBUNDMATERIALS**
METHOD FOR THE PRODUCTION OF A CONDUCTIVE POLYCARBONATE COMPOSITES
PROCÉDÉ DE PRODUCTION D'UN MATÉRIAU COMPOSITE POLYCARBONATE CONDUCTEUR

(30) Priorität: 07.12.2007 DE 102007058992
(43) Veröffentlichungstag der Anmeldung: 25.08.2010
(73) Patentinhaber: Bayer MaterialScience AG, 51368 Leverkusen (DE)
(72) Erfinder: BAHNMÜLLER, Stefan, 098641 Singapore (SG); GREINER, Andreas, 35287 Amöneburg (DE); SCHACKMANN, Markus, 86438 Kissing (DE)
(86) Internationale Anmeldenummer: PCT/EP2008/009969
(87) Internationale Veröffentlichungsnummer: WO 2009/071220

(56) Entgegenhaltungen:
- EP-A- 1 439 248
- DE-A1-102006 037 185

## Beschreibung

Die Erfindung betrifft ein Verfahren zur Herstellung eines elektrisch leitfähigen Polycarbonatverbundmaterials auf Basis von thermoplastischem Polycarbonat und Kohlenstoffnanoröhrchen, bei dem säurefunktionalisierte Kohlenstoffnanoröhrchen mit aufgeschmolzenem Polycarbonat dispergiert werden. Die Kohlenstoffnanoröhrchen werden im folgenden auch gegebenenfalls abgekürzt als CNT (Carbon NanoTubes) bezeichnet.

Kohlenstoffnanoröhrchen besitzen eine Vielzahl außergewöhnlicher Eigenschaften, die sowohl auf ihrer chemischen Struktur des hochkristallinen Kohlenstoffs basieren, als auch auf deren großer Oberfläche.

Unter Kohlenstoffnanoröhrchen werden nach dem Stand der Technik hauptsächlich zylinderförmige Kohlenstoffröhren mit einem Durchmesser zwischen 3 und 100 nm und einer Länge, die ein Vielfaches des Durchmessers beträgt, verstanden. Diese Röhrchen bestehen aus einer oder mehreren Lagen geordneter Kohlenstoffatome und weisen einen in der Morphologie unterschiedlichen Kern auf. Diese Kohlenstoffnanoröhrchen werden beispielsweise auch als "carbon fibrils" oder "hollow carbon fibres" bezeichnet.

In der Fachliteratur sind Kohlenstoffnanoröhrchen seit langem bekannt. Obwohl Iijima (Publikation: S. Iijima, Nature 354, 56-58, 1991) allgemein als Entdecker der Nanotubes bezeichnet wird, sind diese Materialien, insbesondere faserförmige Graphitmaterialien mit mehreren Graphitschichten, schon seit den 70er bzw. frühen 80er Jahren bekannt. Tates und Baker (GB 1469930A1, 1977 und EP 56004 A2) beschrieben erstmals die Abscheidung von sehr feinem faserförmigen Kohlenstoff aus der katalytischen Zersetzung von Kohlenwasserstoffen. Allerdings werden die auf Basis kurzkettiger Kohlenwasserstoffe hergestellten Kohlenstofffilamente nicht näher in Bezug auf ihren Durchmesser charakterisiert.

Übliche Strukturen dieser Kohlenstoffnanoröhrchen sind solche vom Zylinder-Typ. Bei den zylindrischen Strukturen unterscheidet man zwischen den einwandigen Monokohlenstoffnanoröhrchen (Single Wall Carbon Nano Tubes) und den mehrwandigen zylindrischen Kohlenstoffnanoröhrchen (Multi Wall Carbon Nano Tubes). Gängige Verfahren zu ihrer Herstellung sind z.B. Lichtbogenverfahren (arc discharge), Laser-Ablation (laser ablation), chemische Abscheidung aus der Dampfphase (CVD process) und katalytisch-chemische Abscheidung aus der Dampfphase (CCVD process).

Aus Iijima, Nature 354, 1991, 56-8 ist die Bildung von Kohlenstoffröhrchen im Lichtbogenverfahren bekannt, die aus zwei oder mehr Graphenlagen bestehen und zu einem nahtlos geschlossen Zylinder aufgerollt und ineinander geschachtelt sind. Abhängig vom Aufrollvektor sind chirale und achirale Anordnungen der Kohlenstoffatome im Verhältnis zu der Längsachse der Kohlenstofffaser möglich.

Strukturen von Kohlenstoffröhrchen, bei denen eine einzelne zusammenhängende Graphenlage (sogenannter scroll type) oder unterbrochene Graphenlage (sogenannter onion type) die Basis für den Aufbau der Nanoröhre ist, wurden erstmals von Bacon et al., J. Appl. Phys. 34, 1960, 283-90, beschrieben. Die Struktur wird als Scroll Type bezeichnet. Später wurden entsprechende Strukturen auch von Zhou et al., Science, 263, 1994, 1744-47 und von Lavin et al., Carbon 40, 2002, 1123-30 gefunden. Das hohe Maß an Oberflächenaktivität der CNT hat allerdings den folgenden Nachteil: Die CNT bilden mechanisch sehr stabile Aggregate, deren Größe im Mikrometerbereich liegt und deren Verbund nur schwer wieder aufzulösen ist. Es hat daher bislang nicht an Versuchen gefehlt, sich mit der Problematik der Deaggregation von CNT in flüssiger oder in polymerer Matrix auseinander zu setzen.

Xiao-Lin Xie, Yiu-Wing Mai und Xing-Ping Zhou beschreiben in ihrem Reviewartikel von 2005 in "Materials Science and Engineering R 49, 89-112" die Dringlichkeit der Deaggregation, bzw. die Vermeidung von Aggregation und gute Dispergierung von Kohlenstoffnanoröhrchen. Die gebräuchlichen Methoden der Compoundierung zur Herstellung von konventionell gefüllten Polymeren ist der einfachste Weg, um mikroskalige Füllstoffe durch nanoskalige zu ersetzen und Hochleistungspolymere zu erzeugen. Jedoch ist die Dispergierung von Nanofüllstoffen in die polymere Matrix durch die starke Tendenz zur Aggregation viel schwieriger. Zur Verbesserung der Dispergierung von Polymer/CNT-Kompositen werden leistungsstarke Dispergiermethoden wie die Ultraschalltechnik und Hochgeschwindigkeitsscheren eingesetzt. Häufig wird dabei in Lösung gearbeitet, um den Einsatz von Ultraschall zu ermöglichen.

Hilding, Grulke, Zhang und Lockwood beschreiben im Review von 2003 im "Journal of Dispersion Science and Technology, Vol. 24, No. 1, pp. 1-41, 2003" die Dispergierbarkeit von Nanotubes in Flüssigkeiten und die Wichtigkeit der Homogenisierung. Im Herstellungsprozess von Kohlenstoffnanoröhrchen entsteht eine Mischung aus unterschiedlichen Morphologien, die mechanisch verknäuelt oder aggregiert sind. Aggregierte Nanopartikel müssen zur Entwicklung von Materialien mit außergewöhnlichen mechanischen Eigenschaften oft in Flüssigkeiten suspendiert werden.

Die Autoren des Reviews: "Polymer Nanocomposites Containing Carbon Nanotubes, Macromolecules 2006, 39, 5194-5205", Moniruzzaman and Winey, beschreiben den damals aktuellen Stand der Technik zur Erzeugung von Nanocompositen mit Kohlenstoffnanoröhrchen und die Wichtigkeit der Homogenität sehr umfassend.

Aufgabe der Erfindung ist es ein Verfahren zu entwickeln, ein Polycarbonat-CNT-Verbundmaterial zu erzeugen, in dem möglichst viele isolierte CNT vorliegen, womit die mechanischen und elektrischen Eigenschaften von hieraus erhältlichen Polymer-Kompositmaterialien verbessert werden können. Weitere Aufgabe ist es, CNT-Material zu erzeugen, in dem isolierte CNT vorliegen und möglichst wenig Agglomerate und Aggregate von CNT. Unter Agglomeraten und Aggregaten versteht man Zusammenballungen kleiner Partikel (hier CNT-Fasem), die eine Vielzahl der Partikel enthalten, welche physikalisch und oder chemisch aneinander gebunden sind. Agglomerate lassen sich beim Dispergieren leichter in Einzelpartikeln zerlegen als Aggregate.

Es wurde gefunden, dass durch chemische Pfropfung von Polycarbonatmolekülen an die Oberfläche von säurefunktionalisierten CNT die Deaggregation bei der Mischung der Materialien in hohem Maße möglich ist und eine Reaggregation der CNT weitgehend verhindert werden kann.

Gegenstand der Erfindung ist ein Verfahren zur Herstellung eines leitfähigen Kohlenstoffnanoröhrchen-Polycarbonat-Verbundmaterials, dadurch gekennzeichnet, dass in einem ersten Schritt Kohlenstoffnanoröhrchen mit einem Oxidationsmittel zur Bildung von Säuregruppen an den CNT behandelt werden, dass in einem zweiten Schritt die säurefunktionalisierten CNT mit Polycarbonat und einem Umesterungskatalysator gemischt werden, und in einem dritten Schritt die Mischung aufgeschmolzen und geschert wird.

Bevorzugt wird als Oxidationsmittel ein Oxidationsmittel aus der Reihe: Salpetersäure, Wasserstoffperoxid, Kaliumpermanganat und Schwefelsäure oder eine mögliche Mischung dieser Mittel verwendet. Bevorzugt wird Salpetersäure, eine Mischung von Salpetersäure und Schwefelsäure, besonders bevorzugt Salpetersäure verwendet.

Für die Katalyse der Umesterung sind grundsätzlich alle Lewis-Säuren und schwache Brönsted-Säuren geeignet. Die Liganden sollten bevorzugt σ-π-Donoreigenschaften besitzen.

Als Umesterungskatalysator für die Ankopplung des Polycarbonats wird bevorzugt ein Umesterungskatalysator verwendet, der ausgewählt ist aus der Reihe Titantetrabutanolat, BF₃, AlCl₃, SiCl₄, PF₅ und SiF₄.

Besondere Vorteile werden erzielt, wenn das Vermischen, Aufschmelzen und Scheren der Komponenten säurefunktionalisierte CNT, Polycarbonat und Umesterungskatalysator im zweiten und dritten Schritt in einem Reaktionsraum stattfindet.

Weitere Vorteile ergeben sich in einem weiter bevorzugten Verfahren, wenn die Scherung im dritten Schritt bei einer Temperatur abläuft, die höchstens 100 °C, bevorzugt höchstens 80 °C über der Glastemperatur des Polycarbonats liegt.

Kohlenstoffnanoröhrchen im Sinne der Erfindung sind alle einwandigen oder mehrwandigen Kohlenstoffnanoröhrchen vom Zylinder-Typ, Scroll-Typ oder mit zwiebelartiger Struktur. Bevorzugt sind mehrwandige Kohlenstoffnanoröhrchen vom Zylinder-Typ, Scroll-Typ oder deren Mischungen einzusetzen.

Die Kohlenstoffnanoröhrchen werden insbesondere in einer Menge von 0,01 bis 10 Gew.-%, bevorzugt 0,1 bis 5 Gew.-% bezogen auf die Mischung von Polymer und Kohlenstoffnanoröhrchen im fertigen Compound eingesetzt. In Masterbatches ist die Konzentration der Kohlenstoffnanoröhrchen gegebenenfalls größer.

Besonders bevorzugt werden Kohlenstoffnanoröhrchen mit einem Verhältnis von Länge zu Außendurchmesser von größer 5, bevorzugt größer 100, verwendet.

Die Kohlenstoffnanoröhrchen werden besonders bevorzugt in Form von Agglomeraten eingesetzt, wobei die Agglomerate insbesondere einen mittleren Durchmesser im Bereich von 0,05 bis 5 mm, bevorzugt 0,1 bis 2 mm, besonders bevorzugt 0,2 - 1 mm, haben.

Die einzusetzenden Kohlenstoffnanoröhrchen weisen besonders bevorzugt im wesentlichen einen mittleren Durchmesser von 3 bis 100 nm, bevorzugt 5 bis 80 nm, besonders bevorzugt 6 bis 60 nm, auf.

Im Unterschied zu den eingangs erwähnten bekannten CNT vom Scroll-Typ mit nur einer durchgehenden oder unterbrochenen Graphenlage sind von der Anmelderin auch CNT-Strukturen gefunden worden, die aus mehreren Graphenlagen bestehen, die zu einem Stapel zusammengefasst und aufgerollt vorliegen (multiscroll type). Diese CNT-Struktur verhält sich zu den Kohlenstoffnanoröhrchen vom einfachen Scroll-Typ vergleichsweise wie die Struktur mehrwandiger zylindrischer Monokohlenstoffnanoröhrchen (cylindrical MWNT) zur Struktur der einwandigen zylindrischen Kohlenstoffnanoröhrchen (cylindrical SWNT).

Anders als bei den zwiebelartigen Strukturen (onion type structure) verlaufen die einzelnen Graphen- bzw. Graphitschichten in diesen Kohlenstoffnanoröhrchen im Querschnitt gesehen offenbar durchgehend vom Zentrum der CNT bis zum äußeren Rand ohne Unterbrechung. Dies kann z. B. eine verbesserte und schnellere Interkalierung anderer Materialien im Röhrchengerüst ermöglichen, da mehr offene Ränder als Eintrittszone der Interkalate zur Verfügung stehen im Vergleich zu CNT mit einfacher Scrollstruktur (Carbon 34, 1996, 1301-3) oder CNT mit zwiebelartiger Struktur (Science 263, 1994, 1744-7).

Die heute bekannten Methoden zur Herstellung von Carbon Nanotubes umfassen Lichtbogen-, Laserablations- und katalytische Verfahren. Bei vielen dieser Verfahren werden Ruß, amorpher Kohlenstoff und Fasern mit hohem Durchmesser als Nebenprodukte gebildet. Bei den katalytischen Verfahren kann zwischen der Abscheidung an geträgerten Katalysatorpartikeln und der Abscheidung an in situ gebildeten Metallzentren mit Durchmessern im Nanometerbereich (sogenannte Flow-Verfahren) unterschieden werden. Bei der Herstellung über die katalytische Abscheidung von Kohlenstoff aus bei Reaktionsbedingungen gasförmigen Kohlenwasserstoffen (im folgenden CCVD; Catalytic Carbon Vapour Deposition) werden als mögliche Kohlenstoffspender Acetylen, Methan, Ethan, Ethylen, Butan, Buten, Butadien, Benzol und weitere, Kohlenstoff enthaltende Edukte genannt. Bevorzugt werden daher CNT erhältlich aus katalytischen Verfahren eingesetzt.

Die Katalysatoren beinhalten in der Regel Metalle, Metalloxide oder zersetzbare bzw. reduzierbare Metallkomponenten. Beispielsweise sind im Stand der Technik als Metalle für den Katalysator Fe, Mo, Ni, V, Mn, Sn, Co, Cu und weitere Nebengruppenelemente genannt. Die einzelnen Metalle haben meist zwar eine Tendenz, die Bildung von Kohlenstoffnanoröhrchen zu unterstützen, allerdings werden laut Stand der Technik hohe Ausbeuten und geringe Anteile amorpher Kohlenstoffe vorteilhaft mit solchen Metallkatalysatoren erreicht, die auf einer Kombination der oben genannten Metalle basieren. CNT erhältlich unter Verwendung von Mischkatalysatoren sind folglich bevorzugt einzusetzen.

Besonders vorteilhafte Katalysatorsysteme zur Herstellung von CNTs basieren auf Kombinationen von Metallen oder Metallverbindungen, die zwei oder mehr Elemente aus der Reihe Fe, Co, Mn, Mo und Ni enthalten.

Die Bildung von Kohlenstoffnanoröhrchen und die Eigenschaften der gebildeten Röhrchen hängen erfahrungsgemäß in komplexer Weise von der als Katalysator verwendeten Metallkomponente oder einer Kombination mehrerer Metallkomponenten, dem gegebenenfalls verwendeten Katalysatorträgermaterial und der Wechselwirkung zwischen Katalysator und Träger, dem Eduktgas und -partialdruck, einer Beimischung von Wasserstoff oder weiteren Gasen, der Reaktionstemperatur und der Verweilzeit bzw. dem verwendeten Reaktor ab.

Ein besonders bevorzugt einzusetzendes Verfahren zur Herstellung von Kohlenstoffnanoröhrchen ist aus der WO 2006/050903 A2 bekannt.

In den bis hier genannten unterschiedlichen Verfahren unter Einsatz verschiedener Katalysatorsysteme werden Kohlenstoffnanoröhrchen verschiedener Strukturen hergestellt, die aus dem Prozess überwiegend als Kohlenstoffnanoröhrchenpulver entnommen werden können.

Für die Erfindung weiter bevorzugt geeignete Kohlenstoffnanoröhrchen werden nach Verfahren erhalten, die grundsätzlich in den nachstehenden Literaturstellen beschrieben sind:

Die Herstellung von Kohlenstoffnanoröhrchen mit Durchmessern kleiner 100 nm ist erstmals in EP 205 556 B1 beschrieben. Für die Herstellung werden hier leichte (d. h. kurz- und mittelkettige aliphatische oder ein- oder zweikernige aromatische) Kohlenwasserstoffe und ein auf Eisen basierender Katalysator eingesetzt, an dem Kohlenstoffträgerverbindungen bei einer Temperatur oberhalb von 800 - 900°C zersetzt werden.

Die WO 86/03455 A1 beschreibt die Herstellung von Kohlenstofffilamenten, die eine zylindrische Struktur mit einem konstanten Durchmesser von 3.5 bis 70 nm, einem Aspektverhältnis (Verhältnis von Länge zu Durchmesser) von größer 100 und eine Kernregion aufweisen. Diese Fibrilen bestehen aus vielen, durchgängigen Lagen geordneter Kohlenstoffatome, die konzentrisch um die zylindrische Achse der Fibrilen angeordnet sind. Diese zylinderartigen Nanotubes wurden nach einem CVD Prozess aus kohlenstoffhaltigen Verbindungen mittels eines metallhaltigen Partikels bei einer Temperatur zwischen 850°C und 1200 °C hergestellt.

Aus der WO 2007/093337 A2 ist noch ein Verfahren zur Herstellung eines Katalysators bekannt geworden, der für die Herstellung von konventionellen Carbon Nanotubes mit zylindrischer Struktur geeignet ist. Bei Verwendung dieses Katalysators in einem Festbett werden höhere Ausbeuten von zylindrischen Kohlenstoffnanoröhrchen mit einem Durchmesser im Bereich von 5 bis 30 nm gewonnen.

Ein völlig anderer Weg zur Herstellung zylindrischer Kohlenstoffnanoröhrchen wurde von Oberlin, Endo und Koyam beschrieben (Carbon 14, 1976, 133). Dabei werden aromatische Kohlenwasserstoffe, z.B. Benzen, an einem Metallkatalysator umgesetzt. Die entstandene Kohlenstoffröhre zeigt einen gut definierten, graphitischen hohlen Kern der ungefähr den Durchmesser des Katalysatorpartikels hat, auf dem sich weiterer, weniger graphitisch geordneter Kohlenstoff befindet. Die gesamte Röhre kann durch Behandlung bei hoher Temperatur (2500°C - 3000 °C) graphitisiert werden.

Die meisten der oben genannten Verfahren (mit Lichtbogen, Sprühpyrolyse bzw. CVD) werden heute zur Herstellung von Carbon Nanotubes genutzt. Die Herstellung einwandiger zylindrischer Kohlenstoffnanoröhrchen ist jedoch apparativ sehr aufwendig und verläuft nach den bekannten Verfahren mit sehr geringer Bildungsgeschwindigkeit und oft auch mit vielen Nebenreaktionen, die zu einem hohen Anteil an unerwünschten Verunreinigungen führen, d.h. die Ausbeute solcher Verfahren ist vergleichsweise gering. Deshalb ist die Herstellung derartiger Carbon Nanotubes auch heute noch technisch extrem aufwendig und sie kommen daher vor allem für hoch spezialisierte Anwendungen in geringen Mengen zum Einsatz. Ihre Anwendung ist jedoch für die Erfindung denkbar, aber weniger bevorzugt als die Anwendung von mehrwandigen CNT vom Zylinder- oder Scroll-Typ.

Die Herstellung von mehrwandigen Carbon Nanotubes, in Form von ineinander geschachtelten nahtlosen zylindrischen Nanotubes oder auch in Form der beschriebenen Scroll- oder Onion-Strukturen erfolgt heute kommerziell in größeren Mengen überwiegend unter Verwendung katalytischer Verfahren. Diese Verfahren zeigen üblicherweise eine höhere Ausbeute als die oben genannten Lichtbogen- und andere Verfahren und werden heute typischerweise im kg-Maßstab (einige hundert Kilo/Tag weltweit) durchgeführt. Die so hergestellten MW-Carbon Nanotubes sind in der Regel um einiges kostengünstiger als die einwandigen Nanotubes und werden deshalb z.B. als Leistung steigerndes Additiv in anderen Werkstoffen eingesetzt.

Als Polycarbonat für die Durchführung des Verfahrens kommen bevorzugt grundsätzlich die nachstehend genannten oder nach den nachstehenden Verfahren zur Herstellung von Polycarbonat genannten Typen in Frage:

Die Herstellung der erfindungsgemäßen Polycarbonate erfolgt nach dem Phasengrenzflächenverfahren. Dieses Verfahren zur Polycarbonatsynthese ist mannigfaltig in der Literatur beschrieben; beispielhaft sei auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen.

Gemäß diesem Verfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches eine zweite Phase ausbildet. Die entstehenden, hauptsächlich in der organischen Phase vorliegenden Oligocarbonate werden mit Hilfe geeigneter Katalysatoren zu hochmolekularen, in der organischen Phase gelösten, Polycarbonaten aufkondensiert. Die organische Phase wird schließlich abgetrennt und das Polycarbonat durch verschiedene Aufarbeitungsschritte daraus isoliert.

Für die Herstellung von Polycarbonaten sind geeignete Dihydroxyarylverbindungen solche der Formel (2)

HO-Z-OH (2)

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (2) für einen Rest der Formel (3) 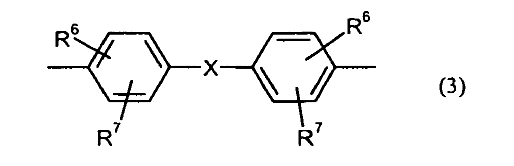 in der
- R⁶ und R⁷: unabhängig voneinander für H, C₁-C₁₈-Alkyl-, C₁-C₁₈-Alkoxy, Halogen wie Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C₅ bis C₆-Cycloalkyliden, -O-, -SO-, -CO-, -S-, -SO₂-,
oder ein für einen Rest der Formel (3a) oder (3b) 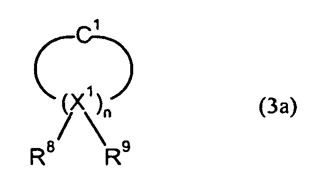 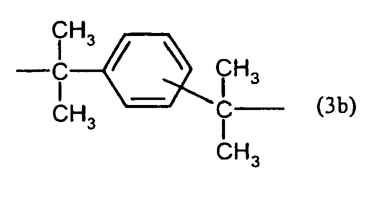 wobei
- R⁸ und R⁹: für jedes X¹ individuell wählbar, unabhängig voneinander Wasserstoff oder C₁ bis C₆-Alkyl, vorzugsweise Wasserstoff, Methyl oder Ethyl bedeuten und
- X¹: Kohlenstoff und
- n: eine ganze Zahl von 4 bis 7, bevorzugt 4 oder 5 bedeuten, mit der Maßgabe, dass an mindestens einem Atom X¹, R⁸ und R⁹ gleichzeitig Alkyl sind.

Beispiele für Dihydroxyarylverbindungen sind Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenylethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete Diphenole sind z.B. in den US-A 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenol oder Alkylphenole, insbesondere Phenol, p-tert. Butylphenol, iso-Octylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel dazu dosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet, oder auch Gemische der Polyphenole oder der Säurechloride.

Einige der verwendbaren Verbindungen mit drei oder mehr als drei phenolischen Hydroxylgruppen sind beispielsweise
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl]-propan,
2,4-Bis-(4-hydroxyphenyl-isopropyl)-phenol,
Tetra-(4-hydroxyphenyl)-methan,

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese verwendeten Katalysatoren sind tertiäre Amine, insbesondere Triethylamin, Tributylamin, Trioctylamin, N-Ethylpiperidin, N-Methylpiperidin, N-i/n-Propylpiperidin; quartäre Ammoniumsalze wie Tetrabutylammonium- / Tributylbenzylammonium-/ Tetraethylammonium- hydroxid / -chlorid / -bromid / -hydrogen-sulfat / -tetrafluoroborat; sowie die den Ammoniumverbindungen entsprechenden Phosphoniumverbindungen. Diese Verbindungen sind als typische Phasengrenzflächen-Katalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es wird eine Oniumverbindung oder Gemische aus Oniumverbindungen als Katalysator verwendet. Dann ist eine Zugabe vor der Phosgendosierung bevorzugt. Die Dosierung des Katalysators oder der Katalysatoren kann in Substanz, in einem inerten Lösungsmittel, vorzugsweise dem der Polycarbonatsynthese, oder auch als wässrige Lösung, im Falle der tertiären Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt zwischen 0,001 bis 10 Mol % bezogen auf Mole eingesetzte Bisphenole, bevorzugt 0,01 bis 8 Mol %, besonders bevorzugt 0,05 bis 5 Mol %.

Den erfindungsgemäßen Polycarbonaten können noch die für Polycarbonate üblichen Additive in den üblichen Mengen zugesetzt werden. Der Zusatz von Additiven dient der Verlängerung der Nutzungsdauer oder der Farbe (Stabilisatoren), der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt. Dabei können die Additive beziehungsweise deren Mischungen als Feststoff, d.h. als Pulver oder als Schmelze der Polymerschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001"

Bevorzugte Thermostabilisatoren sind beispielsweise organische Phosphite, Phosphonate und Phosphane, meist solche bei denen die organischen Reste völlig oder teilweise aus gegebenenfalls substituierten aromatischen Resten bestehen. Als UV-Strabilisatoren werden z.B. substituierte Benztriazole eingesetzt. Diese und andere Stabilisatoren können einzeln oder in Kombinationen verwendet werden und in den genannten Formen dem Polymer zugesetzt werden.

Außerdem können Verarbeitungshilfsmittel wie Entformungsmittel, meist Derivate langkettiger Fettsäuren, zugesetzt werden. Bevorzugt sind z.B. Pentaerythrittetrastearat und Glycerinmonostearat. Sie werden allein oder im Gemisch vorzugsweise in einer Menge von 0,02 bis 1 Gew.-%, bezogen auf die Masse der Zusammensetzung eingesetzt.

Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmodifikatoren sind beispielsweise Pfropfpolymere enthaltend eine oder mehrere Pfropfgrundlagen ausgewählt aus mindestens einem Polybutadienkautschuk, Acrylatkautschuk (vorzugsweise Ethyl- oder Butylacrylatkautschuk), Ethylen-Propylen-Kautschuke und Pfropfmonomeren ausgewählt aus mindestens einem Monomer aus der Gruppe Styrol, Acrylnitril, Alkylmethacrylat (vorzugsweise Methylmethacrylat) oder interpenetrierende Siloxan- und Acrylat-Netzwerke mit aufgepfropftem Methylmethacrylat oder Styrol-Acrylnitril.

Des Weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen Füllstoffen zugesetzt werden.

Mit dem neuen Verfahren wird eine Isolierung von Kohlenstoffnanoröhrchen in der Polycarbonatmatrix möglich. Dieses Verbundmaterial kann jedoch weiter verwendet werden um mit Polycarbonat beschichtete vereinzelte Kohlenstoffnanoröhrchen zu erzeugen.

Weiterer Gegenstand der Erfindung ist nämlich noch ein Verfahren zur Herstellung von mit Polycarbonat beschichteten Kohlenstoffnanoröhrchen, dadurch gekennzeichnet, dass das aus dem neuen oben genannten Verfahren erhältliche Polycarbonat-Kohlenstoffnanoröhrchen-Verbundmaterial in einem Lösungsmittel aufgelöst wird, die erhaltene Lösung zentrifugiert wird und die isolierten mit Polycarbonat beschichteten Kohlenstoffnanoröhrchen von der Lösung abgetrennt werden.

Bevorzugt ist dabei ein Verfahren, das dadurch gekennzeichnet ist, dass das Lösungsmittel ausgewählt ist aus der Reihe: Dichlormethan, Trichlormethan, Monochlorbenzol, Dichlorbenzol, N-Methylpyrrolidon und Dimethylformamid, bevorzugt Dimethylformamid.

### Beispiel

### Einsatzstoffe: (Rezeptur)

### a) Kohlenstoffnanoröhrchen (CNT)

Herstellung:

Kohlenstoffnanoröhrchen (Typ Baytubes® CNT WFA 147; Hersteller: Bayer MaterialScience AG) wurden über eine Stunde mit 65 %iger Sapetersäure im Rückfluss behandelt und anschließend mit Wasser mehrfach gewaschen, bis das Waschwasser neutral war und dann getrocknet. Die so hergestellten Kohlenstoffnanoröhrchen wiesen eine quantitative Säurefunktionalität von 1 meq. Säuregruppen pro Gramm Baytubes® auf und wurden in folgenden sechs Konzentrationen (bezogen auf die Mischung von Polymer + Kohlenstoffnanoröhrchen) eingesetzt:
0,01 -, 0,1 -, 1,0 -, 2,0 -, 5,0 - und 10 Gew.-%

### b) Polycarbonat (PC)

Als Polycarbonatkomponente wurde das Poly(Bisphenol-A-carbonat) (Typ Makrolon^{®} 2808; Hersteller Bayer MaterialScience AG) verwendet.

### c) Umesterungskatalysator

Zur Katalyse der Ver- bzw. Umesterung wurde Ti(IV)-butoxid (Ti(OBu)₄, CAS: 5593-70-4) zu jeweils 0,1 Gew.-%, bezogen auf die gesamte Mischung von Polymer + Kohlenstoffnanoröhrchen + Umesterungskatalysator eingesetzt.

### Versuchsdurchführung

Der Kneter (Hersteller: Haake, Typ Haake Rheomix R600P) mit gegenläufiger Doppelschneckenkneteinheit und einem Fassungsvermögen von 50 ml wurde auf die entsprechende Ausgangstemperatur von 220 °C vorgeheizt. Nach Erreichen der Temperatur wurde der Kneter gestartet und ein Gemenge (etwa 45g) aus Polycarbonat, Kohlenstoffnanoröhrchen und Katalysator zwischen die sich drehenden Knethaken von oben über einen Trichter innerhalb von 30 s zugegeben. Die Drehzahl der Kneterwellen betrug 100 U/min.

Nach vollständiger Zugabe der drei Komponenten (Polycarbonat, Kohlenstoffnanoröhrchen und Ti(OBu)₄) wurde die Zeit gestartet. Die Reaktions-, Verarbeitung- bzw. Vermengungsdauer wurde auf 30 min. festgelegt. Eine Verlängerung der Reaktionszeit über die 30 Minuten führt potentiell zu einem höheren Pfropfungsgrat, aber gleichzeitig zu einer stärkeren Degradation des Polymers. Eine kürzere Verarbeitungszeit führt im Gegensatz dazu zu einer geringeren Pfropfung und einer geringeren Materialschädigung.

Nach der Reaktionszeit von 30 Minuten wurde die Knetbewegung gestoppt, und der Kneter geöffnet. Das entstandene Composite konnte nun im Schmelzezustand mechanisch mittels eines Spatels aus dem Knetraum und von den Knethaken geschabt werden. Der Prozess der Entnahme dauerte ca. 10 Minuten, währenddessen das Produkt im geschmolzenen Zustand an Umgebungsatmosphäre verblieb. Eine Optimierung der Entnahme hinsichtlich kürzerer Dauer und/oder Inertgasatmosphäre wäre großtechnisch noch erforderlich.

Das Material kühlte sich nach Entnahme natürlich bis auf Raumtemperatur ab und konnte im erkalteten Zustand weiter untersucht werden.

Die elektronenspektroskopische Aufnahme in Transmission (TEM) zeigte in einem 80 µm-Dünnschnitt der Nanokomposites aus den sechs Versuchen die Verteilung der Kohlenstoffnanoröhrchen. Es war zu erkennen, dass die Röhrchen außergewöhnlich homogen verteilt waren und voneinander isoliert vorlagen. Während des Herstellungsprozesses der Nanoröhrchen entstandene Aggregate wurden aufgelöst und die Tendenz zur Bildung von neuen Aggregaten erfolgreich verhindert. Die nanotechnologischen Vorteile können optimal genutzt werden.

## Patentansprüche

1. Verfahren zur Herstellung eines leitfähigen Kohlenstoffnanoröhrchen-Polycarbonat-Verbundmaterials, **dadurch gekennzeichnet, dass** in einem ersten Schritt Kohlenstoffnanoröhrchen mit einem Oxidationsmittel zur Bildung von Säuregruppen an den CNT behandelt werden, dass in einem zweiten Schritt die säurefunktionalisierten CNT mit Polycarbonat und einem Umesterungskatalysator gemischt werden, und in einem dritten Schritt die Mischung aufgeschmolzen und geschert wird.

2. Verfahren nach Anspruch 1, **dadurch gekennzeichnet, dass** als Oxidationsmittel Salpetersäure, Wasserstoffperoxid, Kaliumpermanganat und Schwefelsäure oder eine mögliche Mischung dieser Mittel verwendet wird.

3. Verfahren nach einem der Ansprüche 1 oder 2, **dadurch gekennzeichnet, dass** der Umesterungskatalysator ausgewählt ist aus der Reihe Titantetrabutanolat, BF₃, AlCl₃, SiCl₄, PF₅, und SiF₄.

4. Verfahren nach einem der Ansprüche 1 bis 3, **dadurch gekennzeichnet, dass** das Vermischen, Aufschmelzen und Scheren der Komponenten im zweiten und dritten Schritt in einem Reaktionsraum stattfindet.

5. Verfahren nach einem der Ansprüche 1 bis 4, **dadurch gekennzeichnet, dass** die Scherung im dritten Schritt bei einer Temperatur abläuft, die höchstens 100 °C, bevorzugt höchstens 80 °C über der Glastemperatur des Polycarbonats beträgt.

6. Verfahren zur Herstellung von mit Polycarbonat beschichteten Kohlenstoffnanoröhrchen, **dadurch gekennzeichnet, dass** das aus dem Verfahren gemäß einem der Ansprüche 1 bis 5 erhältlichen Polycarbonat-Kohlenstoffnanoröhrchen-Verbundmaterial in einem Lösungsmittel aufgelöst wird, die erhaltene Lösung zentrifugiert wird und die isolierten mit Polycarbonat beschichteten Carbon Nanotubes von der Lösung abgetrennt werden.

7. Verfahren nach Anspruch 6, **dadurch gekennzeichnet, dass** das Lösungsmittel ausgewählt ist aus der Reihe: Dichlormethan, Trichlormethan, Monochlorbenzol, Dichlorbenzol, N-Methylpyrrolidon und Dimethylformamid, bevorzugt Dimethylformamid.

## Claims

1. Process for producing a conductive carbon nanotube-polycarbonate composite, **characterized in that** carbon nanotubes are treated with an oxidant to form acid groups on the CNTs in a first step and the acid-functionalized CNTs are mixed with polycarbonate and a transesterification catalyst in a second step and the mixture is melted and sheared in a third step.

2. Process according to Claim 1, **characterized in that** nitric acid, hydrogen peroxide, potassium permanganate or sulphuric acid or a possible mixture of these agents is used as oxidant.

3. Process according to either Claim 1 or 2, **characterized in that** the transesterification catalyst is selected from the group consisting of titanium tetrabutoxide, BF₃, AlCl₃, SiCl₄, PF₅ and SiF₄.

4. Process according to any of Claims 1 to 3, **characterized in that** the mixing, melting and shearing of the components in the second and third step takes place in one reaction space.

5. Process according to any of Claims 1 to 4, **characterized in that** the shearing in the third step proceeds at a temperature which is not more than 100°C above, preferably not more than 80°C above, the glass transition temperature of the polycarbonate.

6. Process for producing polycarbonate-coated carbon nanotubes, **characterized in that** the polycarbonate-carbon nanotube composite which can be obtained from the process according to any of Claims 1 to 5 is dissolved in a solvent, the solution obtained is centrifuged and the polycarbonate-coated carbon nanotubes isolated are separated off from the solution.

7. Process according to Claim 6, **characterized in that** the solvent is selected from the group consisting of: dichloromethane, trichloromethane, monochlorobenzene, dichlorobenzene, N-methylpyrrolidone and dimethylformamide, preferably dimethylformamide.

## Revendications

1. Procédé de fabrication d'un matériau composite nanotubes de carbone-polycarbonate conducteur, **caractérisé en ce que**, lors d'une première étape, des nanotubes de carbone sont traités avec un oxydant pour former des groupes acides sur les CNT, **en ce que**, lors d'une deuxième étape, les CNT à fonctionnalisation acide sont mélangés avec du polycarbonate et un catalyseur de transestérification, et, lors d'une troisième étape, le mélange est fondu et cisaillé.

2. Procédé selon la revendication 1, **caractérisé en ce que** l'acide nitrique, le peroxyde d'hydrogène, le permanganate de potassium et l'acide sulfurique ou un mélange possible de ces agents est utilisé en tant qu'oxydant.

3. Procédé selon l'une quelconque des revendications 1 ou 2, **caractérisé en ce que** le catalyseur de transestérification est choisi dans la série comprenant le tétrabutanolate de titane, BF₃, AlCl₃, SiCl₄, PF₅ et SiF₄.

4. Procédé selon l'une quelconque des revendications 1 à 3, **caractérisé en ce que** le mélange, la fusion et le cisaillement des composants lors de la deuxième et de la troisième étape ont lieu dans une chambre de réaction.

5. Procédé selon l'une quelconque des revendications 1 à 4, **caractérisé en ce que** le cisaillement lors de la troisième étape se déroule à une température qui se situe au plus 100 °C, de préférence au plus 80 °C, au-dessus de la température de transition vitreuse du polycarbonate.

6. Procédé de fabrication de nanotubes de carbone revêtus avec du polycarbonate, **caractérisé en ce que** le matériau composite polycarbonate-nanotubes de carbone pouvant être obtenu par le procédé selon l'une quelconque des revendications 1 à 5 est dissous dans un solvant, la solution obtenue est centrifugée et les nanotubes de carbone revêtus avec du polycarbonate isolés sont séparés de la solution.

7. Procédé selon la revendication 6, **caractérisé en ce que** le solvant est choisi dans la série : dichlorométhane, trichlorométhane, monochlorobenzène, dichlorobenzène, N-méthylpyrrolidone et diméthylformamide, de préférence diméthylformamide.
